# EUROPÄISCHE PATENTANMELDUNG

(11) **EP 2 031 493 A2**
(43) Veröffentlichungstag der Anmeldung: **04.03.2009**
(21) Anmeldenummer: 08015068.3
(22) Anmeldetag: 26.08.2008
(51) Int. Cl.: G06F 3/06

(54) **Elektronisches Endgerät, externes Speichersystem und Verfahren zum Betrieb eines externen Speichersystems**

(30) Priorität: 30.08.2007 DE 102007041092
(71) Anmelder: Vodafone Holding GmbH, 40213 Düsseldorf (DE)
(72) Erfinder: Lang, Thomas, 81667 München (DE)
(74) Vertreter: Müller & Schubert

(57) **Zusammenfassung**

Die vorliegende Erfindung betrifft ein elektronisches Endgerät (20) sowie ein externes Speichersystem (10) für ein elektronisches Endgerät (40), insbesondere für einen Computer. Um eine einfache und kostengünstige Lösung zu schaffen, mit der für ein elektronisches Endgerät (40) ein externes Speichersystem (10) mit möglichst großer Speicherkapazität geschaffen werden kann, ist vorgesehen, dass das Speichersystem (10) aufweist ein erstes elektronisches Endgerät (20) mit einer ersten, lokalen Speichereinrichtung (21) für Daten, einer Schnittstelle zum Aufbau einer Kommunikationsverbindung zu einer zweiten, zum ersten elektronischen Endgerät (20) räumlich getrennten zweiten Speichereinrichtung (30) für Daten, einer Schnittstelle (26) zum Herstellen einer Verbindung zu einem zweiten elektronischen Endgerät (40), und einer Emulationseinrichtung (25) zum Emulieren eines externen Speichersystems (10), insbesondere einer externen Festplatte, gegenüber dem zweiten elektronischen Endgerät (40); und eine zum ersten elektronischen Endgerät (20) räumlich getrennte zweite Speichereinrichtung (30) für Daten, die eine Schnittstelle zum Aufbau einer Kommunikationsverbindung zum ersten elektronischen Endgerät (20) aufweist. Weiterhin wird ein Verfahren zum Betrieb eines solchen Speichersystems beschrieben.

## Beschreibung

Die vorliegende Erfindung betrifft zunächst ein elektronisches Endgerät. Weiterhin betrifft die vorliegende Erfindung ein externes Speichersystem für ein elektronisches Endgerät sowie ein Verfahren zum Betrieb eines externen Speichersystems.

Mit fortschreitender Entwicklung der Computertechnologie in den unterschiedlichsten Bereichen werden auch die Datenmengen, die gespeichert werden müssen, immer größer. Weiterhin wird auch die Mobilität der Nutzer solcher Daten immer größer, so dass mobile Speichersysteme, oder Speichersysteme, die die Mobilität ihrer Nutzer unterstützen, mit immer größeren Speicherkapazitäten geschaffen werden müssen. Zu denken ist beispielsweise an die Notwendigkeit, während Präsentationen auf Kongressen oder dergleichen große Dateien präsentieren zu müssen.

Solche mobilen Speichersysteme stoßen, was den Speicherplatz betrifft, bei großen Datenmengen oftmals an ihre Grenzen, auch wenn die diesbezügliche technologische Entwicklung rasante Fortschritte macht. Ein weiterer Nachteil besteht darin, dass externe Speichersysteme, wenn sie etwa als Speicher-Sticks oder dergleichen ausgebildet sind, aufgrund ihrer geringen Größe oftmals verloren gehen können.

Zum heutigen Tag ist es weit verbreitet, für mobile Computer externe Festplattensysteme vorzusehen. Diese externen Festplatten, bei denen es sich nach der Lesart der vorliegenden Erfindung um eine Art externer Speichersysteme handelt, können beispielsweise genutzt werden, um umfangreiche persönliche Daten, wie Musikdateien, Fotodateien, Videodateien, oder dergleichen, zu speichern.

Derartige externe Festplatten müssen jedoch Teil des so genannten "Backup-Systems" sein. Dies ist für einen durchschnittlichen Computernutzer ohne tiefgehende Kenntnisse jedoch nicht immer leicht zu handhaben. Ein weiterer Nachteil kann dadurch entstehen, dass unterschiedliche Daten in unterschiedlichen Speichersystemen abgespeichert sind. Beispielsweise können digitale Fotos in einer digitalen Kamera, einem Mobiltelefon mit Kamerafunktion oder dergleichen abgespeichert sein. Musikdateien können beispielsweise in einer entsprechenden Einrichtung zur Wiedergabe solcher Musikdateien, in einem Mobiltelefon mit entsprechender Funktionalität oder dergleichen abgespeichert sein. Dabei ist von Nachteil, dass lokale Speichereinrichtungen in Mobiltelefonen von ihrer Kapazität her oftmals begrenzt sind.

Um die Speicherkapazitäten elektronischer Endgeräte, wie beispielsweise Mobiltelefonen, zu erweitern, sind im Stand der Technik bereits verschiedene Lösungen bekannt geworden.

In der DE 101 46 664 A1 beispielsweise ist ein Verfahren zum Abspeichern von Daten eines Mobiltelefons auf ein externes Speichersystem beschrieben. Bei diesem bekannten Verfahren handelt es sich um ein klassisches Backup-System, bei dem Nutzdaten des Mobiltelefons auf ein externes Computersystem übertragen und dort abgespeichert werden können. Die im Computersystem abgespeicherten Daten können auf das Mobiltelefon jederzeit zurückgespeichert und dem Nutzer auf dem Mobiltelefon unmittelbar und in voller Funktionalität zur Verfügung gestellt werden. Die Übertragung der Daten zwischen dem Mobiltelefon und dem externen Computersystem kann dabei über das Telefonnetz erfolgen. Zusätzlich zu der reinen Backup-Funktion ist es nach dieser bekannten Lösung möglich, dass im Fall, dass die Speicherkapazität für Nutzdaten des Speicherbereichs des Mobiltelefons ausgeschöpft ist, ein Teil der Nutzdaten auf das externe Computersystem ausgelagert und bei Bedarf wieder eingelagert werden kann. Insoweit kann das externe Computersystem auch als eine Art Speicherplatzerweiterung im Hinblick auf den Speicherbereich des Mobiltelefons dienen.

In anderem Zusammenhang, nämlich im Zusammenhang mit Navigationssystemen, sind in der DE 198 59 644 A1 ein mobiles Navigationssystem sowie ein dazugehöriges Betriebsverfahren offenbart. Bei dieser bekannten Lösung weist das Navigationssystem zunächst ein benutzerseitiges Mobilfunkgerät auf, das einen Anschluss an ein Mobilfunknetz aufweist. Weiterhin ist ein Topologiedatenspeicher vorgesehen, auf dem die für die Navigation erforderlichen Topologiedaten abgelegt sind. Dieser Topologiedaten-Speicher ist an einen externen, vom Benutzer räumlich entfernten Server angeschlossen. Der Server kann über das Mobilfunknetz mit dem Mobilfunkgerät kommunizieren. Bei dieser bekannten Lösung können die Topologiedaten zentral auf dem Server vorgehalten, bearbeitet und aktualisiert werden. Auch ist auf Seiten des Mobilfunkgeräts keine groß dimensionierte Speichereinrichtung erforderlich, um die üblicherweise sehr große Menge an Topologiedaten abspeichern zu können.

Bei diesen bekannten Lösungen findet allerdings immer ein direktes Zusammenspiel allein zwischen der externen Speichereinrichtung und dem elektronischen Endgerät, beispielsweise einem Mobiltelefon statt. Nachteilig bei den bekannten Lösungen ist somit, dass die im mobilen elektronischen Endgerät und/oder in der externen Speichereinrichtung gespeicherten Daten anderen elektronischen Endgeräten, beispielsweise Computern oder dergleichen, nicht zur Verfügung gestellt werden können. Insbesondere ist es mit den bekannten Lösungen nicht möglich, einem elektronischen Endgerät, beispielsweise einem Computer oder dergleichen, ein externes Speichersystem mit ausreichend hoher Speicherkapazität zur Verfügung zu stellen.

Ausgehend vom genannten Stand der Technik liegt der vorliegenden Erfindung die Aufgabe zugrunde, ein elektronisches Endgerät, ein externes Speichersystem sowie ein Verfahren zum Betrieb eines externen Speichersystems zur Verfügung zu stellen, mit dem die zuvor beschriebenen Nachteile umgangen werden können. Insbesondere soll eine einfache und kostengünstige Lösung geschaffen werden, mit der für elektronische Endgeräte ein externes Speichersystem mit möglichst großer Speicherkapazität geschaffen werden kann.

Diese Aufgabe wird erfindungsgemäß gelöst durch das elektronische Endgerät mit den Merkmalen gemäß dem unabhängigen Patentanspruch 1, das externe Speichersystem mit den Merkmalen gemäß dem unabhängigen Patentanspruch 6 sowie das Verfahren zum Betrieb eines externen Speichersystems mit den Merkmalen gemäß dem unabhängigen Patentanspruch 15. Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen elektronischen Endgerät beschrieben sind, jeweils auch im Zusammenhang mit dem erfindungsgemäßen Speichersystem sowie dem erfindungsgemäßen Verfahren, Merkmale und Details, die im Zusammenhang mit dem erfindungsgemäßen Speichersystem beschrieben sind, jeweils auch im Zusammenhang mit dem erfindungsgemäßen elektronischen Endgerät sowie dem erfindungsgemäßen Verfahren, und Merkmale und Details, die im Zusammenhang mit dem erfindungsgemäßen Verfahren beschrieben sind, jeweils auch im Zusammenhang mit dem erfindungsgemäßen Speichersystem sowie dem erfindungsgemäßen elektronischen Endgerät, so dass das zu einem der Erfindungsaspekte Gesagte wechselweise jeweils auch im Zusammenhang mit dem zu den anderen Erfindungsaspekten Gesagten gilt.

Die vorliegende Erfindung basiert auf dem Grundgedanken, dass ein externes Speichersystem aus zwei von einander unabhängigen Speichereinrichtungen besteht, wobei zum einen eine Kommunikation zwischen den beiden Speichereinrichtungen vorgesehen ist und wobei zum anderen die Kommunikation zwischen dem externen Speichersystem und einem elektronischen Endgerät (bei dem es sich nachfolgend immer um das zweite elektronische Endgerät handelt) zum über ein elektronisches Endgerät (bei dem es sich nachfolgend immer um das erste elektronische Endgerät handelt) erfolgt, welches Bestandteil des externen Speichersystems ist.

Hierzu bedarf es zunächst eines in besonderer Weise ausgestalteten (ersten) elektronischen Endgeräts.

Gemäß dem ersten Aspekt der Erfindung wird ein (erstes) elektronisches Endgerät, insbesondere ein mobiles elektronisches Endgerät, bereitgestellt, aufweisend eine erste, lokale Speichereinrichtung für Daten; eine Schnittstelle zum Aufbau einer Kommunikationsverbindung zu einer zweiten, zum Endgerät räumlich getrennten zweiten Speichereinrichtung für Daten; eine Schnittstelle zum Herstellen einer Verbindung zu einem zweiten elektronischen Endgerät; und eine Emulationseinrichtung zum Emulieren eines externen Speichersystems, insbesondere einer externen Festplatte, gegenüber dem zweiten elektronischen Endgerät.

Gemäß diesem ersten Aspekt der Erfindung wird ein (erstes) elektronisches Endgerät, insbesondere ein mobiles elektronisches Endgerät, bereitgestellt. Dabei ist die Erfindung natürlich nicht auf bestimmte Ausführungsformen derartiger elektronischer Endgeräte beschränkt. Die elektronischen Endgeräte, die, wie im weiteren Verlauf der Beschreibung noch verdeutlicht wird, Bestandteil eines externen Speichersystems sind, können in beliebiger Weise ausgebildet sein. Wichtig ist lediglich, dass sie in der Lage sind, eine Kommunikationsverbindung zu anderen elektronischen Endgeräten aufzubauen. Beispielsweise können derartige (erste) elektronische Endgeräte als Mobiltelefone, PDAs (Personal Digital Assistant), Smartphones oder dergleichen ausgebildet sein. Im weiteren Verlauf der Beschreibung wird das Wesen der Erfindung des Öfteren anhand eines (ersten) elektronischen Endgeräts erläutert, welches als Mobiltelefon ausgestaltet ist, wobei die Erfindung natürlich nicht auf dieses eine, bevorzugte Ausführungsbeispiel beschränkt ist.

Das (erste) elektronische Endgerät weist eine erste, lokale Speichereinrichtung für Daten auf. Weiterhin ist eine Schnittstelle zum Aufbau einer Kommunikationsverbindung zu einer zweiten, zum (ersten) Endgerät räumlich getrennten zweiten Speichereinrichtung für Daten vorgesehen. Dabei ist die Erfindung natürlich nicht auf bestimmte Schnittstellentypen beschränkt. Diese ergeben sich vielmehr nach der Machart der jeweiligen Geräte sowie dem Kommunikationsweg, über den die Kommunikation ablaufen soll. Vorteilhaft kann vorgesehen sein, dass die Schnittstelle zum Aufbau einer Kommunikationsverbindung zwischen dem ersten elektronischen Endgerät und der zweiten Speichereinrichtung als Schnittstelle zum Aufbau einer Kommunikationsverbindung über ein Telekommunikationsnetz, insbesondere über ein Mobilfunknetz, ausgebildet ist. Im letztgenannten Fall kann die Kommunikation besonders vorteilhaft via UMTS, GPRS oder dergleichen erfolgen.

Darüber hinaus verfügt das (erste) elektronische Endgerät über eine Schnittstelle zum Herstellen einer Verbindung zu einem zweiten elektronischen Endgerät. Dabei ist die Erfindung natürlich nicht auf bestimmte Typen zweiter elektronischer Endgeräte beschränkt. Hierbei kann es sich beispielsweise um stationäre oder portable Computer, elektronische Geräte mit einer Rechnereinheit und einer Kommunikationseinheit, wie beispielsweise Präsentationseinrichtungen (Beamer, Projektoren und dergleichen) oder dergleichen handeln. Ebenso ist die Erfindung nicht auf bestimmte Typen von Schnittstellen beschränkt. Deren Ausgestaltung ergibt sich vielmehr aus der Ausgestaltung der elektronischen Geräte, aus dem zu wählenden Kommunikationsweg zwischen den elektronischen Geräten und dergleichen. Vorteilhaft kann die Schnittstelle im (ersten) elektronischen Endgerät - ebenso wie die Schnittstelle im zweiten elektronischen Endgerät - zum Aufbau einer drahtgebundenen und/oder drahtlosen Kommunikation ausgebildet sein. Besonders bevorzugt kann es sich um eine USB-Schnittstelle handeln.

Schließlich verfügt das (erste) elektronische Endgerät über eine Emulationseinrichtung zum Emulieren eines externen Speichersystems, insbesondere einer externen Festplatte, gegenüber dem zweiten elektronischen Endgerät. Als Emulator wird dabei generell ein System verstanden, welches ein anderes System nachahmt beziehungsweise imitiert. Dadurch kann sich ein Gerät, das mit einem solchen Emulator ausgestattet ist, wie ein anderes Gerät verhalten. Im vorliegenden Fall kann sich das (erste) elektronische Endgerät (beispielsweise ein Mobiltelefon) mittels der Emulatoreinrichtung gegenüber dem zweiten elektronischen Endgerät (beispielsweise einem Computer) wie ein externes Speichersystem, etwa eine externe Festplatte, verhalten, beziehungsweise ein solches externes Speichersystem imitieren.

Die lokale Speichereinrichtung des (ersten) elektronischen Endgeräts ist in der Regel limitiert. Wenn es sich bei dem Endgerät um ein Mobiltelefon handelt, beträgt die Speicherkapazität derartiger lokaler Speichereinrichtungen derzeit bis zu vier Gigabyte. Um die Speicherkapazität der lokalen Speichereinrichtung zu erhöhen, kann eine zweite, externe Speichereinrichtung hinzugezogen werden, die eine wesentlich größere Speicherkapazität haben kann. Die Größe der zweiten Speichereinrichtung, ebenso wie die Größe der lokalen ersten Speichereinrichtung kann beliebig gewählt werden. In vorteilhafter Ausgestaltung ist jedoch vorgesehen, dass die Größe der lokalen ersten Speichereinrichtung kleiner ist als die Größe der externen zweiten Speichereinrichtung, vorteilhaft um ein Vielfaches.

Über geeignete Schnittstellen kann eine Verbindung zwischen der ersten lokalen Speichereinrichtung des (ersten) elektronischen Endgeräts und der dazu externen zweiten Speichereinrichtung hergestellt werden. Wie dies im Einzelnen geschehen kann, wird im Zusammenhang mit dem erfindungsgemäßen Speichersystem weiter unten erläutert.

Vorteilhaft kann das (erste) elektronische Endgerät eine Indexeinrichtung für gespeicherte Daten aufweisen. Allgemein ist ein Index ein Verzeichnis, eine Tabelle oder ein Kennzeichen. Im Zusammenhang mit der Speicherung von Daten kann es sich bei einem Index um eine Art Speichertabelle handeln, die ein Programm für den Index spezifischen Zugriff auf bestimmte Dateien oder Befehlsadressen abfragt. Datenbanken benutzen in der Regel Indizes, um Datensätze nach bestimmten Kriterien zu sortieren. Der generierte Index kennzeichnet dabei die Position der Einträge. Bei einem Index kann es sich folglich um eine Art Liste von Schlüsselinformationen handeln, die auf entsprechende Speicherstellen mit umfangreicheren Informationen zeigen.

Vorteilhaft kann das (erste) elektronische Endgerät eine Einrichtung zum Update-Management für gespeicherte Daten aufweisen. Eine solche Einrichtung hat generell die Funktion, die in der lokalen Speichereinrichtung des (ersten) elektronischen Endgeräts gespeicherten Daten in vorgegebener Weise zu aktualisieren beziehungsweise zu ändern. Da die Speicherkapazität der lokalen Speichereinrichtung des (ersten) elektronischen Endgeräts, beispielsweise eines Mobiltelefons, in der Regel begrenzt ist, hat die Einrichtung zum Update-Management die Aufgabe, dass nur solche Daten in der lokalen Speichereinrichtung gespeichert sind, die bestimmte Voraussetzungen erfüllen. Alle übrigen Daten werden dann in der externen zweiten Speichereinrichtung abgespeichert. Eine derartige Einrichtung zum Update-Management kann alternativ oder zusätzlich auch auf Seiten der externen zweiten Speichereinrichtung vorgesehen sein, so dass diesbezüglich auch auf die Ausführungen zum erfindungsgemäßen externen Speichersystem weiter unten verwiesen und Bezug genommen wird.

Gemäß einem zweiten Aspekt der Erfindung wird ein externes Speichersystem für ein elektronisches Endgerät, insbesondere für einen Computer, bereitgestellt, aufweisend ein erstes elektronisches Endgerät mit einer ersten, lokalen Speichereinrichtung für Daten, einer Schnittstelle zum Aufbau einer Kommunikationsverbindung zu einer zweiten, zum ersten elektronischen Endgerät räumlich getrennten zweiten Speichereinrichtung für Daten, einer Schnittstelle zum Herstellen einer Verbindung zu einem zweiten elektronischen Endgerät, und einer Emulationseinrichtung zum Emulieren eines externen Speichersystems, insbesondere einer externen Festplatte, gegenüber dem zweiten elektronischen Endgerät; und eine zum ersten elektronischen Endgerät räumlich getrennte zweite Speichereinrichtung für Daten, die eine Schnittstelle zum Aufbau einer Kommunikationsverbindung zum ersten elektronischen Endgerät aufweist.

Durch ein derartiges Speichersystem kann insbesondere ein intelligentes, mobiles Speichersystem geschaffen werden, das als externes Speichersystem für ein beliebiges (zweites) elektronisches Endgerät, etwa einen Computer oder dergleichen, eingesetzt werden kann.

Das externe Speichersystem besteht aus zwei grundlegenden Komponenten. Bei einer ersten Komponente handelt es sich um ein (erstes) elektronisches Endgerät mit einer ersten, lokalen Speichereinrichtung für Daten, einer Schnittstelle zum Aufbau einer Kommunikationsverbindung zu einer zweiten, zum ersten elektronischen Endgerät räumlich getrennten zweiten Speichereinrichtung für Daten, einer Schnittstelle zum Herstellen einer Verbindung zu einem zweiten elektronischen Endgerät, und einer Emulationseinrichtung zum Emulieren eines externen Speichersystems, insbesondere einer externen Festplatte, gegenüber dem zweiten elektronischen Endgerät. Das (erste) elektronische Endgerät ist vorteilhaft in der wie weiter oben beschriebenen, erfindungsgemäßen Weise ausgestaltet, so dass auf die in Bezug auf das erfindungsgemäße (erste) elektronische Endgerät gemachten Ausführungen vollinhaltlich Bezug genommen und verwiesen wird.

Das (erste) elektronische Endgerät hat zunächst die Aufgabe, mit dem externen (zweiten) elektronischen Endgerät, für das das Speichersystem als externes Speichersystem, beispielsweise als externe Festplatte, dienen soll, eine Kommunikationsverbindung aufzubauen, über die ein Datenaustausch stattfinden kann. Weiterhin kann das (erste) elektronische Endgerät eine Kommunikationsverbindung zum Zwecke eines Datenaustauschs mit der externen zweiten Speichereinrichtung aufbauen, die vorteilhaft eine größere Speicherkapazität hat. Die zweite, in Bezug auf die lokale Speichereinrichtung des (ersten) elektronischen Endgeräts externe Speichereinrichtung stellt ein zweites grundlegendes Merkmal des erfindungsgemäßen Speichersystems dar.

Ebenso wie das (erste) elektronische Endgerät weist auch die zweite externe Speichereinrichtung eine Schnittstelle zum Aufbau einer Kommunikationsverbindung zum (ersten) elektronischen Endgerät auf. Auch hier ist die Erfindung nicht auf bestimmte Schnittstellentypen beschränkt. Vorteilhaft kann die Schnittstelle so wie beim (ersten) elektronischen Endgerät ausgebildet sein, so dass auf die entsprechenden Ausführungen weiter oben verwiesen und Bezug genommen wird. Vorteilhaft kann die Schnittstelle der zweiten Speichereinrichtung zum Aufbau einer Kommunikationsverbindung zwischen dem ersten elektronischen Endgerät und der zweiten Speichereinrichtung als Schnittstelle zum Aufbau einer Kommunikationsverbindung über ein Telekommunikationsnetz, insbesondere über ein Mobilfunknetz (UMTS, GPRS oder dergleichen), ausgebildet sein.

Die Funktionsweise eines derartigen Speichersystems soll nun anhand eines konkreten, jedoch nicht ausschließlichen Beispiels verdeutlicht werden.

Die lokale Speichereinrichtung des (ersten) elektronischen Endgeräts ist in der Regel beschränkt. Handelt es sich bei diesem Endgerät um ein Mobiltelefon, so haben gängige Mobiltelefone derzeit eine Speicherkapazität von bis zu vier Gigabyte. Um die Speicherkapazität der lokalen Speichereinrichtung zu erhöhen, kann eine externe zweite Speichereinrichtung genutzt werden, die beispielsweise, wie weiter unten noch verdeutlicht wird, einem Kommunikationsnetz zugeordnet ist. Auf diese zweite externe Speichereinrichtung wird mittels einer geeigneten Schnittstelle zugegriffen, wobei die Schnittstelle entsprechend der vorgegebenen Rahmenbedingungen angepasst ist, beispielsweise im Hinblick auf die Ausgestaltung der Kommunikationswege, der Ausgestaltung des Netzes oder dergleichen.

Das externe Speichersystem ist ein intelligentes mobiles Speichersystem und kombiniert zwei Speichereinrichtungen. Eine erste Speichereinrichtung befindet sich im (ersten) elektronischen Endgerät. Eine zweite Speichereinrichtung ist dazu extern vorgesehen. Diese Speichereinrichtung kann beispielsweise netzwerkseitig vorgesehen sein. Das externe Speichersystem kann über das (erste) elektronische Endgerät mit einem zweiten elektronischen Endgerät, beispielsweise einem Computer (PC, Laptop oder dergleichen) verbunden werden, und zwar über eine geeignete Schnittstelle wie USB oder dergleichen.

Das Betriebssystem des zweiten elektronischen Endgeräts, beispielsweise des Computers, erkennt wegen der Emulationseinrichtung im (ersten) elektronischen Endgerät des Speichersystems das externe Speichersystem als zugriffsfähiges Speichersystem, beispielsweise als normale Festplatte. Daten können wie bei einem herkömmlichen Speichersystem geschrieben, gelesen, modifiziert oder gelöscht werden. Die Emulationseinrichtung im externen Speichersystem emuliert das Verhalten eines normalen Speichersystems, beispielsweise einer normalen Festplatte.

Das externe Speichersystem besteht aus zwei Grundelementen, einer lokalen Speichereinrichtung im (ersten) elektronischen Endgerät und einer externen (beispielsweise netzwerkseitigen) zweiten Speichereinrichtung. Das (erste) elektronische Endgerät mit der lokalen Speichereinrichtung weist vorteilhaft eine Indexeinrichtung, einen Pufferspeicher (Cache) und eine bestimmte Menge an gespeicherten Daten (beispielsweise häufig genutzte Daten) auf. Die Speicherkapazität der lokalen ersten Speichereinrichtung stellt eine Untermenge (vorteilhaft einen Bruchteil) der Speicherkapazität der zweiten Speichereinrichtung dar. Beispielsweise könnte die Gesamtspeicherkapazität des externen Speichersystems fünfhundert Gigabyte betragen, während die Speicherkapazität der lokalen (ersten) Speichereinrichtung auf zwei Gigabyte begrenzt ist. Das Speichersystem prüft vorteilhaft die Verwendung der gespeicherten Daten und speichert die häufig genutzten Daten in der - kleineren - lokalen (ersten) Speichereinrichtung. Dies gestattet von Seiten des zweiten elektronischen Endgeräts her einen schnellen Zugriff auf die gespeicherten Daten. Die lokale erste Speichereinrichtung und die externe zweite Speichereinrichtung sind zumindest zeitweilig über ein Kommunikationssystem miteinander verbunden, beispielsweise via UMTS, GPRS oder dergleichen.

Das externe Speichersystem kann in Bezug auf das zweite elektronische Endgerät besonders bevorzugt als externe Festplatte verwendet werden.

Vorteilhaft kann das externe Speichersystem ein Kommunikationsnetz für eine Kommunikation zwischen dem ersten elektronischen Endgerät und der zweiten Speichereinrichtung aufweisen. Natürlich sind auch Lösungen denkbar, in denen das Kommunikationsnetz nicht Bestandteil des Speichersystems ist. In diesem Fall findet nur die Kommunikation zwischen den einzelnen Bestandteilen des Speichersystems über das Kommunikationsnetz statt. Auch ist die Erfindung nicht auf bestimmte Typen von Kommunikationsnetzen beschränkt. Bei einem geeigneten Kommunikationsnetz kann es sich beispielsweise um ein Telekommunikationsnetz, insbesondere um ein Mobilfunknetz, etwa das UMTS-Netz, das GPRS-Netz, oder dergleichen handeln.

Vorteilhaft kann vorgesehen sein, dass die zweite Speichereinrichtung ein Bestandteil des Kommunikationsnetzes ist. In diesem Fall ist die zweite Speichereinrichtung vorzugsweise auf einer, dem Kommunikationsnetz zugeordneten Rechnereinheit implementiert. Eine solche Ausgestaltung bietet dem Netzbetreiber die Möglichkeit, den Nutzern seines Netzwerks zusätzliche Datenspeichermöglichkeiten zur Verfügung zu stellen, auf die diese über ihre (ersten) Endgeräte Zugriff nehmen können.

Vorteilhaft kann die zweite Speichereinrichtung einen oder mehrere Speicherbereiche aufweisen, wobei ein Speicherbereich jeweils einer ersten Speichereinrichtung eines ersten elektronischen Endgeräts zugeordnet ist. Auf diese Weise kann die zweite Speichereinrichtung als eine zentrale Speichereinrichtung für eine Vielzahl von Nutzern (erster) elektronischer Endgeräte dienen.

Vorteilhaft kann dabei jeder Speicherbereich eine Indexeinrichtung für gespeicherte Daten aufweist. Bei dieser Indexeinrichtung kann es sich um eine Einrichtung handeln, wie sie auch im (ersten) elektronischen Endgerät vorhanden sein kann, so dass an dieser Stelle auf die entsprechenden Ausführungen weiter oben Bezug genommen und verwiesen wird.

Ebenso kann das externe Speichersystem eine Einrichtung zum Update-Management für gespeicherte Daten aufweisen. Auch hierbei kann es sich um eine Einrichtung handeln, wie sie auch im (ersten) elektronischen Endgerät vorhanden sein kann, so dass an dieser Stelle auf die entsprechenden Ausführungen weiter oben Bezug genommen und verwiesen wird.

In weiterer Ausgestaltung kann das externe Speichersystem ein Monitorsystem für gespeicherte Daten aufweisen. Ein solches Monitorsystem dient beispielsweise dazu zu prüfen, in welcher Weise die gespeicherten Daten, die in der ersten lokalen Speichereinrichtung und/oder in der externen zweiten Speichereinrichtung gespeichert sind, genutzt werden. Dies kann beispielsweise zeitlich bezogen, inhaltlich bezogen, datentypmäßig bezogen oder dergleichen erfolgen. Aufgrund dieser vom Monitorsystem durchgeführten Prüfung kann dann vom Speichersystem - vorzugsweise automatisch - entschieden werden, welche Daten in der lokalen Speichereinrichtung des (ersten) elektronischen Endgeräts gespeichert werden, und welche Daten in der externen zweiten Speichereinrichtung abgelegt werden. Die entsprechende Speicherung und gegebenenfalls Umspeicherung von Daten erfolgt vorteilhaft über die Einrichtung(en) zum Update-Management.

Gemäß noch einem weiteren Aspekt der Erfindung wird ein Verfahren zum Betrieb eines externen Speichersystems für ein (zweites) elektronisches Endgerät bereitgestellt, bei dem ein erstes elektronisches Endgerät des Speichersystems über eine Schnittstelle eine Verbindung zu dem elektronischen Endgerät herstellt, bei dem eine Emulationseinrichtung im ersten elektronischen Endgerät ein externes Speichersystem, insbesondere eine externe Festplatte, gegenüber dem zweiten elektronischen Endgerät simuliert und bei dem das erste elektronische Endgerät, das eine erste, lokale Speichereinrichtung für Daten aufweist, über eine Schnittstelle zumindest zeitweilig eine Kommunikationsverbindung zu einer zweiten, zum ersten elektronischen Endgerät räumlich getrennten zweiten Speichereinrichtung für Daten aufbaut oder aufbauen kann, so dass in der ersten lokalen Speichereinrichtung des ersten elektronischen Endgeräts und/oder der zweiten, räumlich getrennten Speichereinrichtung gespeicherte Daten dem zweiten elektronischen Endgerät über die Schnittstelle zur Verfügung gestellt und/oder vom elektronischen Endgerät in der ersten lokalen Speichereinrichtung des ersten elektronischen Endgeräts und/oder der zweiten, räumlich getrennten Speichereinrichtung abgespeichert werden oder werden können.

Vorzugsweise dient das Verfahren zum Betrieb eines wie vorstehend beschriebenen erfindungsgemäßen externen Speichersystems, so dass hinsichtlich der Funktionsweise des Verfahrens auch auf die Ausführungen zum erfindungsgemäßen (ersten) elektronischen Endgerät sowie zum erfindungsgemäßen externen Speichersystem vollinhaltlich Bezug genommen und hiermit verwiesen wird.

Bei dem Verfahren geht es generell um eine externe Speichermöglichkeit und eine Art Speicherkapazitätserweiterung bei (ersten) elektronischen Endgeräten, beispielsweise Mobiltelefonen, die nur über eine begrenzte Speicherkapazität verfügen. Das externe Speichersystem weist eine erste Speichereinrichtung auf, die sich im (ersten) elektronischen Endgerät befindet. Eine hierzu externe, zweite Speichereinrichtung, die dann den Hauptspeicher darstellt, befindet sich außerhalb des (ersten) elektronischen Endgeräts, beispielsweise in einem Kommunikationsnetz.

Für den Nutzer eines zweiten elektronischen Endgeräts, beispielsweise eines Computers, für den das Speichersystem als externes Speichersystem fungieren soll, sieht es allerdings so aus, als gäbe es nur ein einziges, einteiliges Speichersystem, das dessen (zweites) elektronisches Endgerät nur mit dem (ersten) elektronischen Endgerät des Speichersystems kommuniziert. Im (ersten) elektronischen Endgerät ist der Index abgespeichert sowie eine bestimmte Menge an Daten, beispielsweise häufig genutzte Daten, die jüngsten Daten oder dergleichen.

Das (erste) elektronische Endgerät verfügt über eine Emulationseinrichtung, die gegenüber dem zweiten elektronischen Endgerät ein zu diesem kompatibles Speichersystem, beispielsweise eine externe Festplatte oder dergleichen, imitiert, wenn das (erste) elektronische Endgerät über eine geeignete Verbindung, beispielsweise USB, mit dem zweiten elektronischen Gerät verbunden und von diesem als externes Speichersystem erkannt wird.

Wählt der Nutzer des zweiten elektronischen Endgeräts aus der Indexeinrichtung, die sich im (ersten) elektronischen Endgerät befindet, Daten aus, die sich nicht in der lokalen Speichereinrichtung des (ersten) elektronischen Endgeräts befinden, so baut das (erste) elektronische Endgerät eine Verbindung zur externen zweiten Speichereinrichtung auf und holt sich die Daten von dort ab und überträgt sie zum zweiten elektronischen Endgerät des Nutzers. Der Nutzer bekommt von dieser Prozedur nichts mit, da sie aus seiner Blickrichtung gesehen hinter seinem direkten Kommunikationspartner - dem (ersten) elektronischen Endgerät - stattfindet.

Die Erfindung wird nun anhand eines Ausführungsbeispiels unter Bezugnahme auf die beiliegenden Zeichnungen näher erläutert. Es zeigen
- Figur 1: in schematischer Darstellung ein erfindungsgemäßes externes Speichersystem, das mit einem elektronischen Endgerät verbunden ist;
- Figur 2: in schematischer Darstellung und in größerem Detail ein in Figur 1 in allgemeiner Weise dargestelltes (erstes) elektronisches Endgerät des externen Speichersystems; und
- Figur 3: in schematischer Darstellung und in größerem Detail eine in Figur 1 in allgemeiner Weise dargestellte zweite externe Speichereinrichtung des externen Speichersystems.

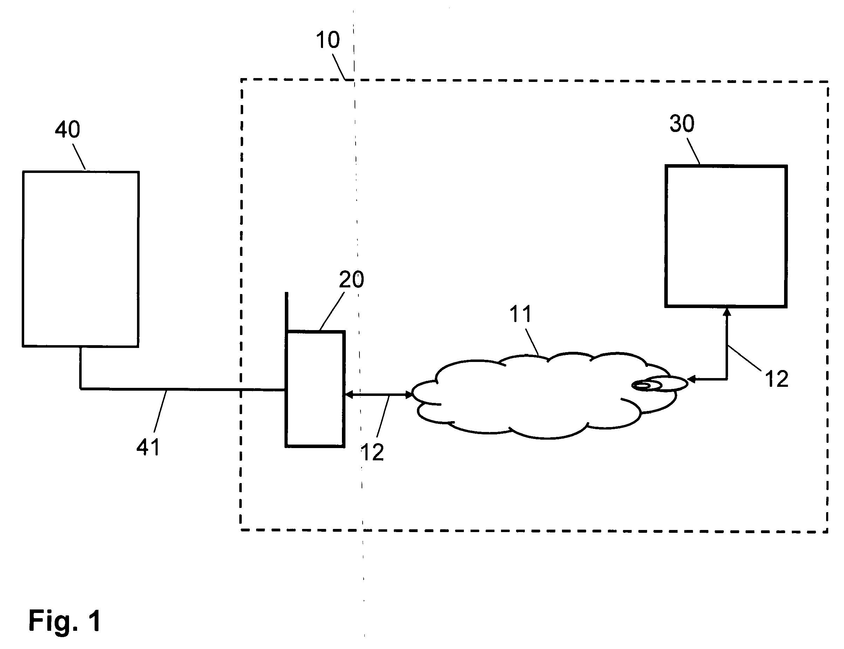

In Figur 1 ist ein Speichersystem 10 dargestellt, das als externes Speichersystem, etwa in Form einer externen Festplatte, für ein (zweites) elektronisches Gerät 40 dienen kann. Bei dem (zweiten) elektronischen Gerät 40 kann es sich beispielsweise um einen Computer oder dergleichen handeln.

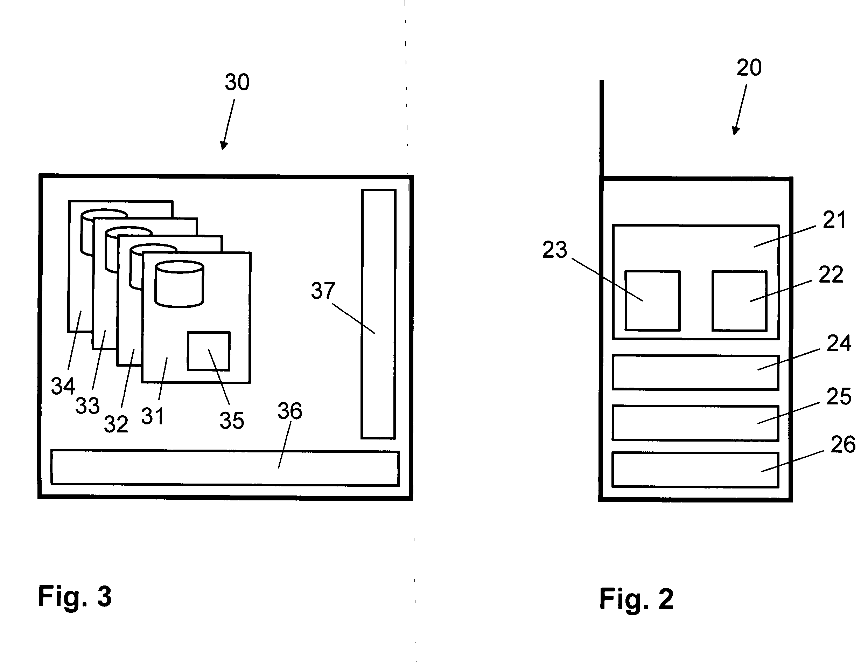

Das externe Speichersystem 10 weist zunächst ein (erstes) elektronisches Endgerät 10 auf, bei dem es sich beispielsweise um ein Mobiltelefon handelt. Wie in Figur 2 dargestellt ist, weist das Mobiltelefon 10 zunächst eine lokale erste Speichereinrichtung 21 mit einer begrenzten Speicherkapazität auf. Diese Speichereinrichtung 21 wiederum weist eine Indexeinrichtung 22 sowie einen Pufferspeicher 23 auf. Bei der Indexeinrichtung handelt es sich um eine Art Liste von Schlüsselinformationen, die auf entsprechende Speicherstellen mit umfangreicheren Informationen zeigen. Weiterhin verfügt das Mobiltelefon 10 über eine Einrichtung 24 zum Update-Management, mittels derer die in der lokalen Speichereinrichtung 21, vorzugsweise im Pufferspeicher 23, gespeicherten Daten, bearbeitet, aktualisiert, verschoben, verändert oder dergleichen werden können. Schließlich weist das Mobiltelefon eine Schnittstelle 26 zum Aufbau einer Verbindung zum Computer 40 (siehe Figur 1) auf. Die aufgebaute Verbindung ist durch die Bezugsziffer 41 gekennzeichnet. Eine Emulationseinrichtung 25 im Mobiltelefon 20 hat die Aufgabe, gegenüber dem Computer 40 ein zu diesem kompatibles Speichersystem, beispielsweise eine entsprechende externe Festplatte, nachzuahmen.

Das externe Speichersystem 10 weist zusätzlich eine zweite, zur lokalen Speichereinrichtung 21 im (ersten) elektronischen Endgerät 20 externe Speichereinrichtung 30 auf, die im Vergleich zur lokalen Speichereinrichtung 21 des Mobiltelefons 20 eine wesentlich größere Speicherkapazität aufweist. Diese externe Speichereinrichtung 30 ist in Figur 3 im Detail dargestellt.

Demnach weist die Speichereinrichtung 30, die beispielsweise in einer zentralen Rechnereinheit implementiert sein kann, eine Reihe von Speicherbereichen 31, 32, 33, 34 auf. Zur Verdeutlichung sind in Figur 3 vier solcher Speicherbereiche dargestellt. Allerdings ist die Erfindung nicht auf eine bestimmte Anzahl von einzelnen Speicherbereichen beschränkt.

Jeder Speicherbereich ist einer bestimmten lokalen Speichereinrichtung in einem (ersten) lokalen Endgerät zugeordnet. Beispielsweise könnte der Speicherbereich 31 in der externen Speichereinrichtung 30 der lokalen Speichereinrichtung 21 im Mobiltelefon 20 zugeordnet sein. Vorzugsweise beinhaltet auch der Speicherbereich 31 eine Indexeinrichtung 35, die im vorliegenden Beispiel der Indexeinrichtung 22 (siehe Figur 2) im Mobiltelefon 20 entspricht. Auf diese Weise lassen sich die Daten im Speicherbereich 31 der externen Speichereinrichtung 30 derart speichern, dass auf diese vom Mobiltelefon 20 aus problemlos zugegriffen werden kann.

Schließlich verfügt auch die externe Speichereinrichtung 30 über eine Einrichtung 36 zum Update-Management. Zusätzlich ist in der Speichereinrichtung 30 ein Monitorsystem 37 vorgesehen, welches überprüft, welche der gespeicherten Daten in was für einer Weise verwendet beziehungsweise genutzt werden.

Wie in Figur 1 veranschaulicht ist, verfügen sowohl das Mobiltelefon 20 als auch die externe Speichereinrichtung 30 über geeignete Schnittstellen, über die sie miteinander kommunizieren können. Im dargestellten Beispiel erfolgt die Kommunikation über ein Kommunikationsnetz 11, beispielsweise ein Mobilfunknetz, über welches bei Bedarf eine geeignete Kommunikationsverbindung 12 zwischen dem Mobiltelefon 20 und der Speichereinrichtung 30 hergestellt werden kann.

Nachfolgend wird nun die Funktionsweise eines derartigen Speichersystems 10 veranschaulicht.

Die lokale Speichereinrichtung 21 des (ersten) elektronischen Endgeräts 20 (des Mobiltelefons) ist im Hinblick auf die Speicherkapazität in der Regel beschränkt. Handelt es sich bei diesem Endgerät 20 um ein Mobiltelefon, so haben gängige Mobiltelefone derzeit eine Speicherkapazität von bis zu vier Gigabyte. Um die Speicherkapazität der lokalen Speichereinrichtung 21 zu erhöhen, kann die externe zweite Speichereinrichtung 30 genutzt werden, die beispielsweise dem Kommunikationsnetz 11 zugeordnet ist.

Das externe Speichersystem 10 ist ein intelligentes mobiles Speichersystem und kombiniert die zwei Speichereinrichtungen 21, 30. Die erste Speichereinrichtung 21 befindet sich im (ersten) elektronischen Endgerät 20, dem Mobiltelefon. Die zweite Speichereinrichtung 30 ist dazu extern vorgesehen. Diese Speichereinrichtung 30 ist im Beispiel netzwerkseitig vorgesehen. Das externe Speichersystem 10 wird über das (erste) elektronische Endgerät 20 mit dem zweiten elektronischen Endgerät 40, beispielsweise einem Computer (PC, Laptop oder dergleichen) verbunden (über die Kommunikationsverbindung 41), und zwar über eine geeignete Schnittstelle 26 wie USB oder dergleichen.

Das Betriebssystem des zweiten elektronischen Endgeräts 40, beispielsweise des Computers, erkennt aufgrund der Emulationseinrichtung 25 im (ersten) elektronischen Endgerät 20 das externe Speichersystem 10 als zugriffsfähiges, kompatibles Speichersystem, beispielsweise als normale Festplatte. Daten können nun wie bei einem herkömmlichen Speichersystem geschrieben, gelesen, modifiziert oder gelöscht werden. Die Emulationseinrichtung 25 im externen Speichersystem 10 emuliert gegenüber dem Computer 40 das Verhalten eines normalen Speichersystems, beispielsweise einer normalen Festplatte.

Das externe Speichersystem 10 besteht aus zwei Grundelementen, der lokalen Speichereinrichtung 21 im (ersten) elektronischen Endgerät 20 und der externen (beispielsweise netzwerkseitigen) zweiten Speichereinrichtung 30. Das (erste) elektronische Endgerät 20 weist in der lokalen Speichereinrichtung 21 die Indexeinrichtung 22 und den Pufferspeicher (Cache) 23 auf, in dem eine bestimmte Menge an gespeicherten Daten (beispielsweise häufig genutzte Daten) abgespeichert sind. Die Speicherkapazität der lokalen ersten Speichereinrichtung 21 stellt eine Untermenge (vorteilhaft einen Bruchteil) der Speicherkapazität der zweiten Speichereinrichtung 30 dar. Beispielsweise könnte die Gesamtspeicherkapazität des externen Speichersystems 10 fünfhundert Gigabyte betragen, während die Speicherkapazität der lokalen (ersten) Speichereinrichtung 21 auf zwei Gigabyte begrenzt ist. Das Speichersystem 10 prüft vorteilhaft über das Monitorsystem 37 die Verwendung der gespeicherten Daten und speichert die häufig genutzten Daten in der - kleineren - lokalen (ersten) Speichereinrichtung 21. Diese Umspeicherung von Daten wird mittels der Einrichtungen 24, 36 zum Update-Management bewerkstelligt. Dies gestattet von Seiten des zweiten elektronischen Endgeräts 40 her einen schnellen Zugriff auf die gespeicherten Daten. Die lokale erste Speichereinrichtung 21 und die externe zweite Speichereinrichtung 30 sind zumindest zeitweilig über ein Kommunikationssystem (hier das Kommunikationsnetz 11) miteinander verbunden (über die Kommunikationsverbindung 12), beispielsweise via UMTS, GPRS oder dergleichen.

Bei dem Verfahren geht es generell um eine externe Speichermöglichkeit und eine Art Speicherkapazitätserweiterung bei (ersten) elektronischen Endgeräten 20, beispielsweise Mobiltelefonen, die nur über eine begrenzte Speicherkapazität verfügen. Das externe Speichersystem 10 weist eine erste Speichereinrichtung 21 auf, die sich im (ersten) elektronischen Endgerät 20 befindet. Eine hierzu externe, zweite Speichereinrichtung 30, die dann den Hauptspeicher darstellt, befindet sich außerhalb des (ersten) elektronischen Endgeräts 20, beispielsweise im Kommunikationsnetz 11.

Für den Nutzer eine zweiten elektronischen Endgeräts 40, beispielsweise eines Computers, für den das Speichersystem 10 als externes Speichersystem fungieren soll, sieht es allerdings so aus, als gäbe es nur ein einziges, einteiliges Speichersystem, da dessen (zweites) elektronisches Endgerät 40 nur mit dem (ersten) elektronischen Endgerät 20 des Speichersystems 10 kommuniziert. Im (ersten) elektronischen Endgerät 20 ist der Index 22 abgespeichert sowie eine bestimmte Menge an Daten, beispielsweise häufig genutzte Daten, die jüngsten Daten, Daten eines bestimmten Datentyps, oder dergleichen.

Das (erste) elektronische Endgerät 20 verfügt über eine Emulationseinrichtung 25, die gegenüber dem zweiten elektronischen Endgerät 40 ein zu diesem kompatibles Speichersystem, beispielsweise eine externe Festplatte oder dergleichen, nachahmt, wenn das (erste) elektronische Endgerät 20 über eine geeignete Verbindung 41, beispielsweise USB, mit dem zweiten elektronischen Gerät 40 verbunden und von diesem als externes Speichersystem erkannt wird.

Wählt der Nutzer des zweiten elektronischen Endgeräts 40 aus der Indexeinrichtung 22, die sich im (ersten) elektronischen Endgerät 20 befindet, Daten aus, die sich nicht in der lokalen Speichereinrichtung 21 des (ersten) elektronischen Endgeräts 20 befinden, so baut das (erste) elektronische Endgerät 20 eine Verbindung 12 zur externen zweiten Speichereinrichtung 30 auf und holt sich die Daten von dort ab und überträgt sie zum zweiten elektronischen Endgerät 40 des Nutzers. Der Nutzer bekommt von dieser Prozedur nichts mit, da sie aus seiner Blickrichtung gesehen hinter seinem direkten Kommunikationspartner - dem (ersten) elektronischen Endgerät 20 - stattfindet.

### Bezugszeichenliste

- 10: Externes Speichersystem (externes Festplattensystem)
- 11: Kommunikationsnetz (Mobilfunknetz)
- 12: Kommunikationsverbindung

- 20: Erstes elektronisches Endgerät (Mobiltelefon)
- 21: Erste lokale Speichereinrichtung
- 22: Indexeinrichtung
- 23: Pufferspeicher (Cache)
- 24: Einrichtung zum Update-Management
- 25: Emulationseinrichtung zum Emulieren eines externen Speichersystems
- 26: Schnittstelle zu einem zweiten elektronischen Endgerät (USB-Schnittstelle)

- 30: Zweite Speichereinrichtung
- 31: Speicherbereich
- 32: Speicherbereich
- 33: Speicherbereich
- 34: Speicherbereich
- 35: Indexeinrichtung
- 36: Einrichtung zum Update-Management
- 37: Monitorsystem

- 40: Zweites elektronisches Endgerät (Computer)
- 41: Aufgebaute Verbindung (zum Datenaustausch)

## Patentansprüche

1. Elektronisches Endgerät (20), insbesondere mobiles elektronisches Endgerät, aufweisend eine erste, lokale Speichereinrichtung (21) für Daten; eine Schnittstelle zum Aufbau einer Kommunikationsverbindung zu einer zweiten, zum Endgerät (20) räumlich getrennten zweiten Speichereinrichtung (30) für Daten; eine Schnittstelle (26) zum Herstellen einer Verbindung zu einem zweiten elektronischen Endgerät (40); und eine Emulationseinrichtung (25) zum Emulieren eines externen Speichersystems (10), insbesondere einer externen Festplatte, gegenüber dem zweiten elektronischen Endgerät (40).

2. Elektronisches Endgerät nach Anspruch 1, **dadurch gekennzeichnet, dass** die Schnittstelle zum Aufbau einer Kommunikationsverbindung zwischen dem ersten elektronischen Endgerät (20) und der zweiten Speichereinrichtung (30) als Schnittstelle zum Aufbau einer Kommunikationsverbindung über ein Telekommunikationsnetz, insbesondere über ein Mobilfunknetz, ausgebildet ist.

3. Elektronisches Endgerät nach Anspruch 1 oder 2, **dadurch gekennzeichnet, dass** dieses eine Indexeinrichtung (22) für gespeicherte Daten aufweist.

4. Elektronisches Endgerät nach einem der Ansprüche 1 bis 3, **dadurch gekennzeichnet, dass** dieses eine Einrichtung (24) zum Update-Management für gespeicherte Daten aufweist.

5. Externes Speichersystem (10) für ein elektronisches Endgerät (40), insbesondere für einen Computer, aufweisend ein erstes elektronisches Endgerät (20) mit einer ersten, lokalen Speichereinrichtung (21) für Daten, einer Schnittstelle zum Aufbau einer Kommunikationsverbindung zu einer zweiten, zum ersten elektronischen Endgerät (20) räumlich getrennten zweiten Speichereinrichtung (30) für Daten, einer Schnittstelle (26) zum Herstellen einer Verbindung zu einem zweiten elektronischen Endgerät (40), und einer Emulationseinrichtung (25) zum Emulieren eines externen Speichersystems (10), insbesondere einer externen Festplatte, gegenüber dem zweiten elektronischen Endgerät (40); und eine zum ersten elektronischen Endgerät (20) räumlich getrennte zweite Speichereinrichtung (30) für Daten, die eine Schnittstelle zum Aufbau einer Kommunikationsverbindung zum ersten elektronischen Endgerät (20) aufweist.

6. Externes Speichersystem nach Anspruch 5, dass die Schnittstelle der zweiten Speichereinrichtung (30) zum Aufbau einer Kommunikationsverbindung zwischen dem ersten elektronischen Endgerät (20) und der zweiten Speichereinrichtung (30) als Schnittstelle zum Aufbau einer Kommunikationsverbindung über ein Telekommunikationsnetz, insbesondere über ein Mobilfunknetz, ausgebildet ist.

7. Externes Speichersystem nach Anspruch 5 oder 6, **dadurch gekennzeichnet, dass** dieses ein Kommunikationsnetz (11) für eine Kommunikation zwischen dem ersten elektronischen Endgerät (20) und der zweiten Speichereinrichtung (30) aufweist.

8. Externes Speichersystem nach Anspruch 7, **dadurch gekennzeichnet, dass** die zweite Speichereinrichtung (30) Bestandteil des Kommunikationsnetzes (11) ist.

9. Externes Speichersystem nach einem der Ansprüche 5 bis 8, **dadurch gekennzeichnet, dass** das erste elektronische Endgerät (20) nach einem der Ansprüche 1 bis 5 ausgebildet ist.

10. Externes Speichersystem nach einem der Ansprüche 5 bis 9, **dadurch gekennzeichnet, dass** die zweite Speichereinrichtung (30) einen oder mehrere Speicherbereiche (31, 32, 33, 34) aufweist, wobei ein Speicherbereich (31) jeweils einer ersten Speichereinrichtung (21) eines ersten elektronischen Endgeräts (20) zugeordnet ist.

11. Externes Speichersystem nach einem der Ansprüche 5 bis 10, **dadurch gekennzeichnet, dass** jeder Speicherbereich (31, 32, 33, 34) eine Indexeinrichtung (35) für gespeicherte Daten aufweist.

12. Externes Speichersystem nach einem der Ansprüche 5 bis 11, **dadurch gekennzeichnet, dass** dieses eine Einrichtung (36) zum Update-Management für gespeicherte Daten aufweist.

13. Externes Speichersystem nach einem der Ansprüche 5 bis 12, **dadurch gekennzeichnet, dass** dieses ein Monitorsystem (37) für gespeicherte Daten aufweist.

14. Verfahren zum Betrieb eines externen Speichersystems (10) für ein elektronisches Endgerät (40), insbesondere eines Speichersystems nach einem der Ansprüche 5 bis 13, bei dem ein erstes elektronisches Endgerät (20) des Speichersystems (10) über eine Schnittstelle (26) eine Verbindung zu dem elektronischen Endgerät (40) herstellt, bei dem eine Emulationseinrichtung (25) im ersten elektronischen Endgerät (20) ein externes Speichersystem (10), insbesondere eine externe Festplatte, gegenüber dem zweiten elektronischen Endgerät (40) simuliert und bei dem das erste elektronische Endgerät (20), das eine erste, lokale Speichereinrichtung (21) für Daten aufweist, über eine Schnittstelle zumindest zeitweilig eine Kommunikationsverbindung zu einer zweiten, zum ersten elektronischen Endgerät (20) räumlich getrennten zweiten Speichereinrichtung (30) für Daten aufbaut oder aufbauen kann, so dass in der ersten lokalen Speichereinrichtung (21) des ersten elektronischen Endgeräts (20) und/oder der zweiten, räumlich getrennten Speichereinrichtung (30) gespeicherte Daten dem zweiten elektronischen Endgerät (40) über die Schnittstelle (26) zur Verfügung gestellt und/oder vom elektronischen Endgerät (40) in der ersten lokalen Speichereinrichtung (21) des ersten elektronischen Endgeräts (20) und/oder der zweiten, räumlich getrennten Speichereinrichtung (30) abgespeichert werden oder werden können.
